# EUROPÄISCHE PATENTANMELDUNG

(11) **EP 1 244 190 A1**
(43) Veröffentlichungstag der Anmeldung: **25.09.2002**
(21) Anmeldenummer: 02005873.1
(22) Anmeldetag: 14.03.2002
(51) Int. Cl.: H02G 3/06

(54) **Reparaturteil**

(30) Priorität: 20.03.2001 DE 10113354
(71) Anmelder: SIEMENS AKTIENGESELLSCHAFT, 80333 München (DE)
(72) Erfinder: Gerbig, Alfred, 36251 Bad Hersfeld (DE); Hoffmann, Bernd, 36251 Bad Hersfeld (DE); Seyfarth, Lutz, 37287 Wehretal-Hoheneiche (DE); Stange, Rüdiger, 36214 Nentershausen (DE)

(57) **Zusammenfassung**

Ein Reparaturteil zum Abdichten einer beschädigten Stelle eines Wellrohrs (4) hat einen zwischen zwei Kupplungsteilen (2, 3) angeordneten Abschnitt eines Wellrohrs (1). Zum Einsatz des Reparaturteils wird die beschädigte Stelle aus dem Wellrohr (4) ausgeschnitten und die Enden mit den Kupplungsteilen (2, 3) verbunden.

## Beschreibung

Die Erfindung betrifft ein Reparaturteil zum Abdichten einer beschädigten Stelle eines Wellrohrs, insbesondere eines in einem Kabelbaum eines Kraftfahrzeuges verlegten Wellrohrs.

Bei heutigen Kraftfahrzeugen werden häufig Schlauchleitungen, beispielsweise für eine Scheibenreinigungsanlage als Wellrohr ausgebildet und zusammen mit elektrischen Leitungen in dem Kabelbaum verlegt. Beim Einbau der Schlauchleitungen in den Kabelbaum oder bei der Verlegung des Kabelbaums in der Karosserie des Kraftfahrzeuges kann das Wellrohr beschädigt werden. Ein Austausch des Wellrohrs im verbauten Zustand ist jedoch sehr kostenintensiv, da die Gesamtlänge der Schlauchleitung für eine Reinigungsanlage häufig bis zu sechs Metern beträgt. Das bekannte Reparaturteil ist daher ein selbstklebendes Gewebeband, welches um die beschädigte Stelle gewickelt wird.

Nachteilig bei dem bekannten Reparaturteil ist, dass das Wellrohr nur sehr schwer gleichmäßig zu umwickeln ist. Hierdurch kann nach einiger Zeit die beschädigte und umwickelte Stelle erneut undicht werden.

Der Erfindung liegt das Problem zugrunde ein Reparaturteil der eingangs genannten Art so zu gestalten, dass die Abdichtung der beschädigten Stelle besonders zuverlässig und dauerhaft ist.

Dieses Problem wird erfindungsgemäß gelöst durch ein rohrförmiges Kupplungsteil mit an seinen Enden angeordneten, gegenüber dem Wellrohr abdichtenden Anschlussstutzen.

Durch diese Gestaltung lässt sich die beschädigte Stelle durch das Kupplungsteil überbrücken. Zur Montage des erfindungsgemäßen Reparaturteils wird zunächst der Bereich des Wellrohrs, in dem sich die beschädigte Stelle befindet, durchgeschnitten und das Kupplungsteil eingesetzt. Die Anschlussstutzen des Kupplungsteils dichten gegenüber dem Wellrohr ab. Für unterschiedlich lange Beschädigungen des Wellrohrs können unterschiedlich lange Kupplungsteile vorgesehen sein.

Bei besonders langen Beschädigungen des Wellrohrs lässt sich dessen Flexibilität gemäß einer vorteilhaften Weiterbildung der Erfindung auch nach der Reparatur einfach durch zwei über ein Wellrohr verbundene Kupplungsteile sicherstellen. Hierdurch lässt sich das Wellrohr des erfindungsgemäßen Reparaturteil auf die vorgesehene Länge schneiden und mit den beiden Kupplungsteilen verbinden und anschließend in das im Kraftfahrzeug verlegte Wellrohr einsetzen. Hierbei kann zudem sichergestellt werden, dass kein Kupplungsteil im Bereich einer Abwinklung angeordnet wird.

Die Abdichtung des Kupplungsteils gegenüber den angrenzenden Wellrohren gestaltet sich gemäß einer anderen vorteilhaften Weiterbildung der Erfindung konstruktiv besonders einfach, wenn das Kupplungsteil zumindest in seinen an das Wellrohr angrenzenden Bereichen ein gummielastisches Material aufweist.

Die Verbindung des erfindungsgemäßen Reparaturteils mit angrenzenden Wellrohren weist eine besonders hohe Stabilität auf, wenn der Anschlussstutzen auf seiner Innenseite eine dem Wellrohr entsprechende Kontur hat.

Zur weiteren Erhöhung der Festigkeit der Verbindung des Kupplungsteils mit den angrenzenden Wellrohren trägt es bei, wenn das Kupplungsteil aus einem federelastischen Kunststoff gefertigt ist und wenn der Anschlussstutzen auf seiner Außenseite eine Klemmhülse aufweist.

Die Klemmhülse ist gemäß einer anderen vorteilhaften Weiterbildung der Erfindung zuverlässig mittels einer Rastverbindung mit dem Kupplungsteil verbunden, wenn das Kupplungsteil einen in eine Ausnehmung der Klemmhülse eindringenden Vorsprung hat.

Ein Knicken des Wellrohrs gegenüber dem Kupplungsteil könnte zu Undichtigkeiten führen. Undichtigkeiten bei einer Knickbeanspruchung des Wellrohrs im Bereich des Kupplungsteils lassen sich jedoch gemäß einer anderen vorteilhaften Weiterbildung der Erfindung einfach vermeiden, wenn das Kupplungsteil einen in das Wellrohr hineinragenden Zentrierkragen hat.

Zur weiteren Erhöhung der Zuverlässigkeit der Abdichtung bei mechanischer Beanspruchung des Wellrohrs trägt es gemäß einer anderen vorteilhaften Weiterbildung der Erfindung bei, wenn der Zentrierkragen an seiner an dem Wellrohr anliegenden Seite einen Dichtabschnitt aufweist.

Die Montage der Klemmhülse an dem Anschlussstutzen gestaltet sich gemäß einer anderen vorteilhaften Weiterbildung der Erfindung besonders einfach, wenn die Klemmhülse an seiner Innenseite einen durchmessergroßen Abschnitt und einen durchmesserkleinen Abschnitt hat und wenn der Anschlussstutzen entsprechend geformt ist. Hierdurch wird sichergestellt, dass die Klemmhülse an zwei voneinander beabstandeten Stellen an dem Anschlussstutzen anliegt. Dies führt zudem zu einem zuverlässigen Kraftschluss zwischen der Klemmhülse an dem Anschlussstutzen.

Eine zylindrisch gestaltete Klemmhülse wird gemäß einer anderen vorteilhaften Weiterbildung der Erfindung zuverlässig auf dem Anschlussstutzen gehalten, wenn der Anschlussstutzen an seiner Außenseite eine Hohlkehle hat.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig.1: einen Längsschnitt durch ein erfindungsgemäßes Reparaturteil,
- Fig.2: eine stark vergrößerte Darstellung eines Kupplungsteils des Reparaturteils aus Figur 1.

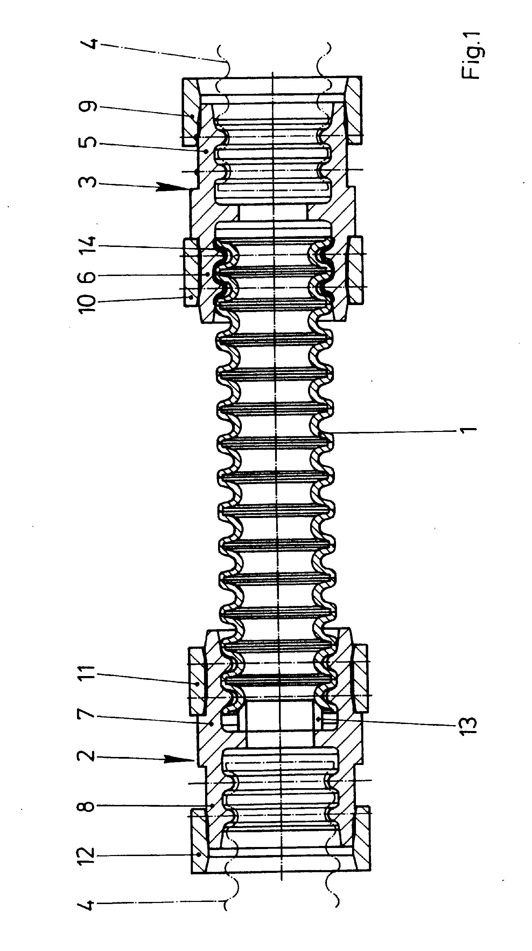

Figur 1 zeigt eine Schnittdarstellung durch ein Reparaturteil mit einem Abschnitt eines Wellrohrs 1 und zwei an dem Abschnitt des Wellrohrs 1 befestigten Kupplungsteilen 2, 3. Dieses Reparaturteil dient zum Ersatz einer beschädigten Stelle, eines beispielsweise in einem Kraftfahrzeug verlegten Wellrohrs 4. Die Kupplungsteile 2, 3 werden beim Einbau an die nach der Entfernung der beschädigten Stelle entstandenen Enden des verlegten Wellrohrs 4 angeschlossen. Zur Verdeutlichung sind die Enden des verlegten Wellrohrs 4 in der Zeichnung strichpunktiert dargestellt. Die Kupplungsteile 2, 3 sind lösbar mit dem Abschnitt des Wellrohrs 1 verbunden und weisen hierfür jeweils Anschlussstutzen 5 - 8 auf, in denen die Enden des Abschnitts des Wellrohrs 1 und des zu reparierenden Wellrohrs 4 befestigt und abgedichtet werden. Die Länge des Abschnitts des Wellrohrs 1 lässt sich damit entsprechend der Länge der beschädigten Stelle anpassen. Die Kupplungsteile 2, 3 sind aus einem federelastischen Material gefertigt. Die Anschlussstutzen 5 - 8 sind jeweils von axial verschieblichen Klemmhülsen 9 - 12 radial nach innen vorgespannt.

In einem Sonderfall, bei dem die beschädigte Stelle sehr klein ist, lässt sich das beschädigte Wellrohr 4 an der beschädigten Stelle durchschneiden und die Enden des Wellrohrs 4 anschließend mit einem einzelnen Kupplungsteil 2 verbinden.

Einer der Anschlussstutzen 7 hat einen hervorstehenden, in das Wellrohr 1 hineinragenden Zentrierkragen 13 aus gummielastischem Material. Ein anderer Anschlussstutzen 6 weist an seiner an dem Wellrohr 1 anliegenden Seite einen, als Beschichtung ausgebildete Dichtabschnitt 14 aus einem gummielastischen Material auf. Hierdurch werden die Anschlussstutzen 6, 7 gegenüber dem Wellrohr 1 abgedichtet.

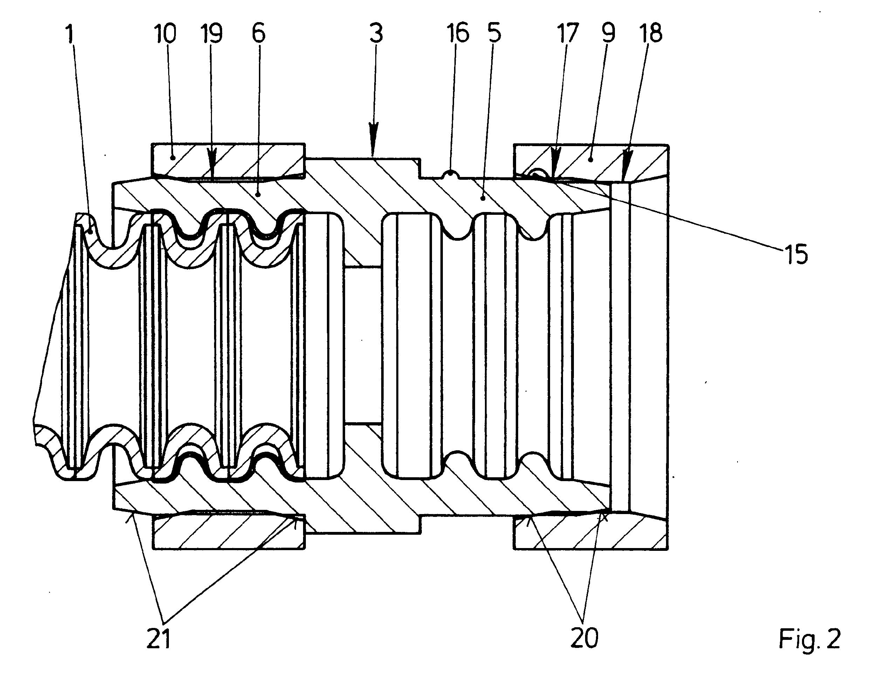

Figur 2 zeigt stark vergrößert eines der Kupplungsteile 3 in einer stark vergrößerten Darstellung. Hierbei ist zu erkennen, dass eine der Klemmhülsen 9 eine Ausnehmung 15 und der Anschlussstutzen 5 einen Vorsprung 16 hat. Beim Aufschieben der Klemmhülse 9 über den Anschlussstutzen 5 rastet der Vorsprung 16 in die Ausnehmung 15 und sichert die Klemmhülse 9 gegen ein Abfallen von dem Anschlussstutzen 5. Eine der Klemmhülsen 9 hat an seiner Innenseite einen durchmessergroßen Abschnitt 17, und einen durchmesserkleinen Abschnitt 18. Der dieser Klemmhülse 9 zugehörende Anschlussstutzen 5 ist an seiner Außenseite entsprechend geformt. Der andere Anschlussstutzen 6 hat eine Hohlkehle 19, während die zugehörige Klemmhülse 10 zylindrisch gestaltet ist. Damit liegen im montierten Zustand die Klemmhülsen 9, 10 an zumindest zwei voneinander beabstandeten Stellen an den Anschlussstutzen 5, 6 an. Zur Erleichterung des Aufschiebens haben die Klemmhülsen 9, 10 und die Anschlussstutzen 5, 6 jeweils Fasen 20, 21.

## Patentansprüche

1. Reparaturteil zum Abdichten einer beschädigten Stelle eines Wellrohrs, insbesondere eines in einem Kabelbaum eines Kraftfahrzeuges verlegten Wellrohrs,
**gekennzeichnet durch** ein rohrförmiges Kupplungsteil (2, 3) mit an seinen Enden angeordneten, gegenüber dem Wellrohr (4) abdichtenden Anschlussstutzen (5 - 8).

2. Reparaturteil nach Anspruch 1, **gekennzeichnet durch** zwei über ein Wellrohr (1) verbundene Kupplungsteile (2, 3).

3. Reparaturteil nach Anspruch 1 oder 2, **dadurch gekennzeichnet, dass** das Kupplungsteil (2, 3) zumindest in seinen an das Wellrohr (1, 4) angrenzenden Bereichen ein gummielastisches Material aufweist.

4. Reparaturteil nach zumindest einem der vorhergehenden Ansprüche, **dadurch gekennzeichnet, dass** der Anschlussstutzen (5 - 8) auf seiner Innenseite eine dem Wellrohr (1, 4) entsprechende Kontur hat.

5. Reparaturteil nach zumindest einem der vorhergehenden Ansprüche, **dadurch gekennzeichnet, dass** das Kupplungsteil (2, 3) aus einem federelastischen Kunststoff gefertigt ist und dass der Anschlussstutzen (5 - 8) auf seiner Außenseite eine Klemmhülse (9-12) aufweist.

6. Reparaturteil nach zumindest einem der vorhergehenden Ansprüche, **dadurch gekennzeichnet, dass** das Kupplungsteil (3) einen in eine Ausnehmung (15) der Klemmhülse (9) eindringenden Vorsprung (16) hat.

7. Reparaturteil nach zumindest einem der vorhergehenden Ansprüche, **dadurch gekennzeichnet, dass** das Kupplungsteil (2) einen in das Wellrohr (1) hineinragenden Zentrierkragen (13) hat.

8. Reparaturteil nach zumindest einem der vorhergehenden Ansprüche, **dadurch gekennzeichnet, dass** der Zentrierkragen (13) an seiner an dem Wellrohr (1) anliegenden Seite einen Dichtabschnitt aufweist.

9. Reparaturteil nach zumindest einem der vorhergehenden Ansprüche, **dadurch gekennzeichnet, dass** die Klemmhülse (9) an seiner Innenseite einen durchmessergroßen Abschnitt (17) und einen durchmesserkleinen Abschnitt (18) hat und dass der Anschlussstutzen (5) entsprechend geformt ist.

10. Reparaturteil nach zumindest einem der vorhergehenden Ansprüche, **dadurch gekennzeichnet, dass** der Anschlussstutzen (6) an seiner Außenseite eine Hohlkehle (19) hat.
